# EUROPEAN PATENT APPLICATION

(11) **EP 3 974 589 A1**
(43) Date of publication of application: **30.03.2022**
(21) Application number: 21196334.3
(22) Date of filing: 13.09.2021
(51) Int. Cl.: E03C 1/04, F16K 11/00, F16K 27/04

(54) **VALVE SYSTEM FOR A SHOWER**

(30) Priority: 23.09.2020 CN 202011010934
(71) Applicant: Fujian Xihe Sanitary Ware Technology Co., Ltd., QuanZhou, Fujian 362304 (CN)
(72) Inventor: LIN, Xiaofa, QuanZhou, 362304 (CN); LIN, Xiaoshan, QuanZhou, 362304 (CN); LIU, Qiqiao, QuanZhou, 362304 (CN); DENG, Xiaoqing, QuanZhou, 362304 (CN); YU, Kaishi, QuanZhou, 362304 (CN)
(74) Representative: Argyma

(57) **Abstract**

Disclosed is a shower. The shower comprises a body(10), a valve element(20), a handle(30) and a valve seat(40). The valve element(20) is mounted on the body(10) and is provided with several valve element water-passing holes, the handle(30) is fixedly connected to a valve rod of the valve element(20), the body(10) is provided with body water-passing holes correspondingly communicated with the valve element water-passing holes, the valve seat(40) is located between the body(10) and the valve element(20) and is circumferentially matched with the body(10), the valve seat(40) is provided with several mutually independent water passing channels communicated with the corresponding body water-passing holes all the time, and the valve element(20) rotates relative to the body(10) and is communicated with the body water-passing holes in any position via the water passing channels, such that the shower can be matched with handles with various rotating ranges without being redesigned and produced.

## Description

### a. BACKGROUND

### a. Technical Field

The disclosure relates to the technical field of showers, in particular to a shower.

### b. Description of Related Art

An existing shower primarily includes a main body, a valve element and a handle, wherein the main body is provided with a plurality of water passing channels for water inflow and water outflow. The valve element can be divided into a thermostatic valve and a switching valve. The thermostatic valve is for controlling the temperature of the water outflow, the switching valve is for switchingthe water outflow channel, and the handle is usually connected to the valve rod of the switching valve or the thermostatic valve for operating the valve element. Generally speaking, for ease of adjusting the water temperature by the thermostatic valve or switching water channel by the switching valve, the control is usually realized by way of rotation, which can provide more tap positions compared with the pressing valve element. The water outlet of the rotary valve element is usually arranged at the bottom of the valve element. When the valve element is mounted on the main body of the shower, the water outlet at the bottom of the valve element is required to hermetically and correspondingly communicated with the water inlet in the main body, which means the mounting position of the valve element is determinate when the position of the water inlet in the main body is determinate. Meanwhile, the rotary valve element is usually rotating in a fixed form. The positions of the starting point and the end point have been predetermined, and the adjustment and control by a hand wheel cannot be affected by an external environment (for example, a wall). When the adjustment and control is performed by a handle, as a hand grip of the handle is longer, the rotating range of the handle may be required to adjust according to an actual condition, for example, the rotation in a sectorial area in the vertical direction is adjusted to rotation in a sectorial area in the horizontal direction, which means it is needed to adjust the mounting position of the valve element synchronously and it is also needed to adjust the position of the water inlet in the main body. Such adjustment makes it a must to redesign and produce a forming die of the main body, thereby increasing the manufacturing cost greatly and obviously.

### b. SUMMARY

Below is the summary of a subject described in detail herein and the summary is not to limit the protection scope of the claims.

The embodiment of the disclosure provides a shower. The shower includes a body, a valve element, a handle and a valve seat. The valve element is mounted on the body and is provided with several valve element water-passing holes, the handle is fixedly connected to a valve rod of the valve element, the body is provided with body water-passing holes communicated with the valve element water-passing holes in one-to-one correspondence manner, the valve seat is located between the body and the valve element and is circumferentially matched with the body, the valve seat is provided with several mutually independent water passing channels always communicated with the body water-passing holes in one-to-one correspondence manner, and the valve element rotates relative to the body and is communicated with the body water-passing holes at any position via the water passing channels, such that the shower can be matched with handles of various rotating ranges, and redesign and produce of the shower is .not needed.

### C. BRIEF DESCRIPTION OF THE DRAWINGS

In order to describe the technical schemes in the embodiments of the disclosure more clearly, the accompanying drawings to be used in the embodiments will be introduced briefly below. It is obvious that the accompanying drawings described below are some embodiments of the disclosure, and those skilled in the technical field can obtain other drawings according to the accompanying drawings without creative efforts.
Fig. 1 is a partial structural section view of embodiment 1 of the shower provided by the disclosure;
Fig. 2 is a first structural schematic view of the valve seat in Fig. 1;
Fig. 3 is a second structural schematic view of the valve seat in Fig. 1;
Fig. 4 is a structural schematic view of the body in Fig. 1;
Fig. 5 is a structural schematic view of the valve seat adopted in embodiment 2 of the shower provided by the disclosure;
Fig. 6 is a state schematic view of the handle in different mounting positions in embodiment 1 or embodiment2 of the shower provided by the disclosure.

### Descriptions of main reference numerals:

10 body; 11 first water passing cavity; 12 second water passing cavity; 13 third water passing cavity; 141 first positioning slot; 142 second positioning slot; 143 third positioning slot; 20 valve element; 30 handle; 40 valve seat; 41 first water sealing plate; 411 first water passing pipe; 412 second water passing pipe; 413 first side wall; 414 second side wall; 42 second water sealing plate; 421 third water passing pipe; 43 third water sealing plate; 44 positioning protrusion; 451 first water-passing hole; 452 second water-passing hole; 453 third water-passing hole; 461 fourth water-passing hole; 471 sixth water-passing hole; 481 first through groove; 482 second through groove; 483 third through groove.

### D. DESCRIPTION OF THE EMBODIMENTS

The technical solutions in the embodiments will be clearly and completely described below with reference to the accompanying drawings.

The shower provided by the disclosure includes embodiment 1 and embodiment 2 in the description, and embodiment 1 is explained and described below first.

### Embodiment 1

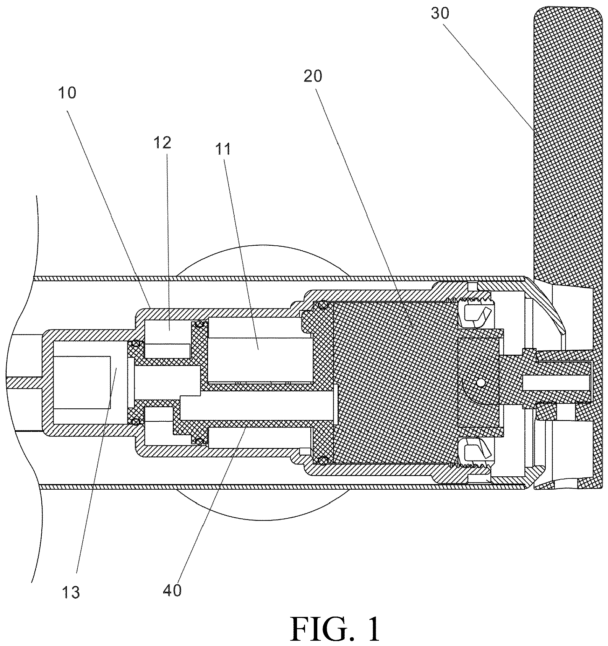

Referring to Fig. 1, Fig. 1 shows a partial structural section view of embodiment 1 of the shower provided by the disclosure. The shower primarily includes a body 10, a valve element 20, a handle 30 and a valve seat 40.

In the embodiment, the shower includes a thermostatic valve element portion and a water dividing valve element portion. The thermostatic valve element portion is provided with the thermostatic valve element which is provided with two water channels for respectively connecting hot water and cold water externally supplied, the hot water and the cold water are mixed by the thermostatic valve element to form warm water with a proper temperature, and the warm water then enters the water dividing valve element portion. The water dividing valve element portion is provided with three water channels which are a warm water inflow channel communicated with the thermostatic valve element, and a shower headwater outflow channel for a shower head and a top spray water outflow channel for a top spray respectively.

The body 10 is a main body portion of the shower, is internally provided with a plurality of water passing channels and is communicated with external water supply pipeline or water outflow pipeline via a connector. The thermostatic valve element is mounted at one end of the body 10, the water dividing valve element is mounted at the other end of the body 10, and the body 10 is provided with a water channel between the thermostatic valve element and the water dividing valve element for communicating the two valve elements, and warm water is supplied to the water channel.

The body 10 is provided with three water channels at the position corresponding to the thermostatic valve element and at the position corresponding to the water dividing valve element portion respectively. The three water channels on the body 10 corresponding to the thermostatic valve element are a hot water supply channel, a cold water supply channel and a warm water outflow channel respectively. The three water channels on the body 10 corresponding to the water dividing valve element are a warm water inflow channel a shower head water outflow channel and a top spray water outflow channel respectively. Therefore, as shown in Fig. 1, in the partial structure, a chamber sinking inward is formed in the axial direction of the body 10, three body water-passing holes are formed in the side wall of the chamber from outside to inside, and the three body water-passing holes can be used for water inflow or water outflow.

Furthermore, the chamber on the body 10 is of a two-stage step profile and the inner diameter of the chamber is decreased in sequence from outside to inside.

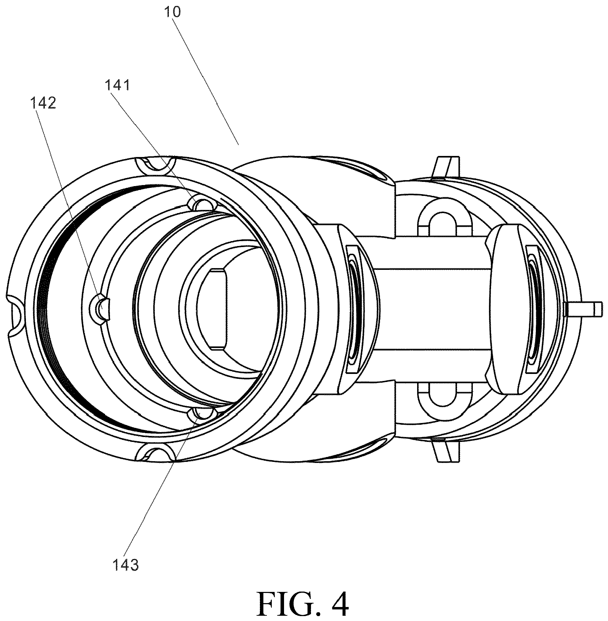

In addition, as shown in Fig. 4, the body 10 is further provided with the positioning slots. In the embodiment, three positioning slots are formed: a first positioning slot 141, a second positioning slot 142 and a third positioning slot 143, and a phase angle difference between at least one positioning slot and the other two positioning slots is 90 degrees. For the embodiment, a phase angle difference between the second positioning slot 142 and the first positioning slot 141, the third positioning slot 143 is 90 degrees. Furthermore, by taking the horizontal direction as shown in Fig. 4 as the horizontal axis of a rectangular coordinate system, the first poisoning slot 141 is at a 90-degree position, the second positioning slot 142 is at a 180-degree position and the third positioning slot 143 is at a 270-degree position.

The valve element 20 can be the thermostatic valve element or the water dividing valve element, and the valve element 20 is provided with the valve rod and three valve element water-passing holes. The valve element water-passing holes are used for being connected with external water supply and then forming water outflows after being adjusted by the valve element 20. The valve rod is used for controlling water inflow and water outflow of the valve element 20 and extends outside relative to the valve element 20. An end portion of the valve rod is provide with a valve rod mounting hole sinking inward, and a portion close to the end portion of the valve rod is provided with a ring of flange extending outward.

The handle 30 is of a long hand grip structure, a position close to an end portion of the handle is provided with a boss, and amounting hole sinking inward is formed in the boss.

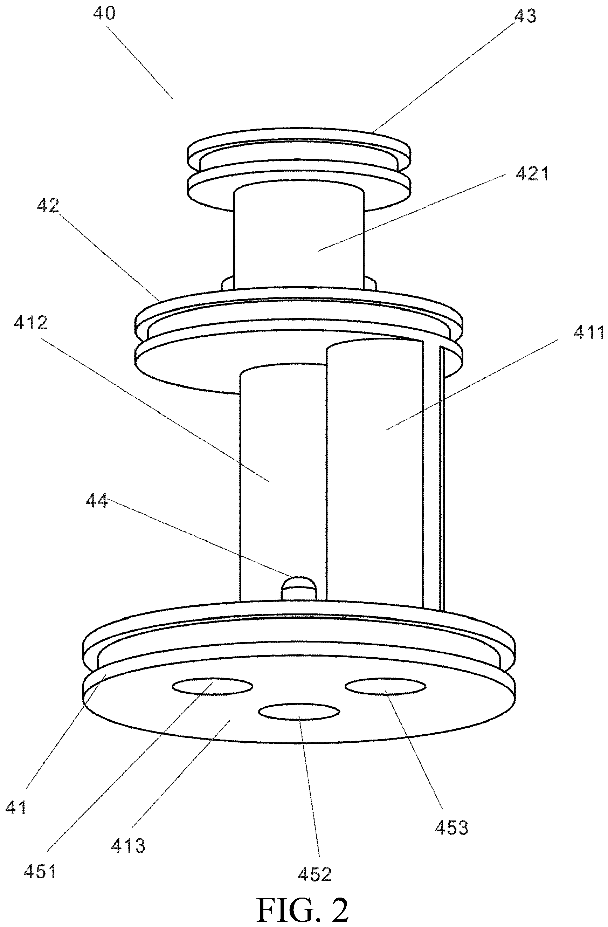

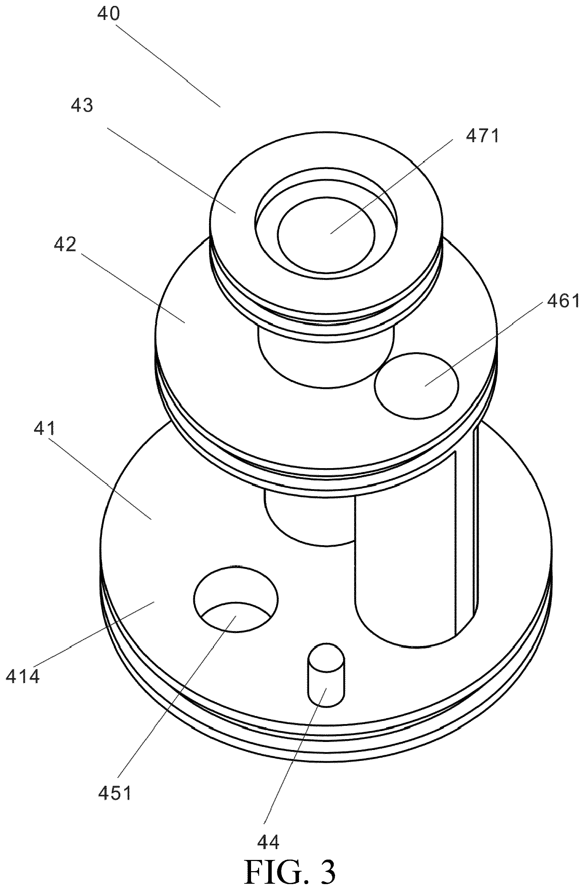

The structure of the valve seat 40 is as shown in Fig. 1, Fig. 2 and Fig. 3, and the valve seat is provided with several mutually independent water passing channels. In particular, the valve seat 40 includes several water sealing plates and water passing pipes, the water sealing plates are arranged in sequence along the axial direction of the valve seat and are provided with water sealing plate water-passing holes penetrating through the water sealing plate along the axial direction of the valve seat, and the water passing pipes are communicated with the adjacent two water sealing plate water-passing holes to form the water passing channels. Further, the diameters of the plurality of water sealing plates are decreased in sequence from outside to inside along the axial direction of the valve seat, such that the valve seat 40 can be inserted into the body 10 properly and a correct mounting direction of the valve seat 40 is assured .

More particularly, in the embodiment, the valve seat 40 includes the first water sealing plate 41, the second water sealing plate 42 and the third water sealing plate 43, the first water passing pipe 411, the second water passing pipe 412 and the third water passing pipe 421 as well as the positioning protrusion 44. It should be noted that the valve seat 40 can be integrally formed of plastic. By dividing the valve seat, into the structure described above it is merely to facilitate description and also facilitate those skilled in the art to understand the structure of the valve seat 40, and does not mean that the valve seat 40 can only be a split structure.

The first water sealing plate 41 is provided with three water-passing holes which are the first water-passing hole 451, the second water-passing hole 452 and the third water-passing hole 453respectively, and each water-passing hole of the first water sealing plate 41 penetrates through the first water sealing plate 41 along the axial direction of the first water sealing plate 41. For the first water-passing hole 451, it itself forms a water passing channel. The first side wall 413 is the outward side of the first water sealing plate 41 and the second side wall 414 is the inward side of the first water sealing plate 41.A periphery of the first water sealing plate 41 is provided with a groove for mounting the sealing ring.

The second water sealing plate 42 is provided with two water-passing holes which are the fourth water-passing hole 461 and the fifth water-passing hole respectively, and each water-passing hole of the second water sealing plate 42 penetrates through the second water sealing plate 42 along the axial direction of the second water sealing plate 42.A periphery of the second water sealing plate 42 is provided with a groove for mounting the sealing ring.

The third water sealing plate 43 is provided with one water-passing hole which is the sixth water-passing hole 471, and the sixth water-passing hole 471 penetrates through the third water sealing plate 43 along the axial direction of the third water sealing plate 43.A periphery of the third water sealing plate 43 is provided with a groove for mounting the sealing ring.

The first water passing pipe 411 is arranged between the first water sealing plate 41 and the second water sealing plate 42, and two ends of the first water passing pipe 411 are communicated with the third water-passing hole 453 and the fourth water-passing hole 461 respectively.

The second water passing pipe 412 is arranged between the first water sealing plate 41 and the second water sealing plate 42, and two ends of the second water passing pipe 412 are communicated with the second water-passing hole 452 and the fifth water-passing hole respectively.

The third water passing pipe 421 is arranged between the second water sealing plate 42 and the third water sealing plate 43, and two ends of the third water passing pipe 421 are communicated with the fifth water-passing hole and the sixth water-passing hole471 respectively.

The positioning protrusion 44 is arranged on the second side wall 414 of the first water sealing plate 41 and is of a cylindrical structure protruding relative to the plane of the second side wall 414.By cooperating the positioning protrusion 44 with the positioning slot in an inserted manner, the position of the valve seat 40 can be determined without deviation.

In addition, the valve seat 40 is located between the body 10 and the valve element 20, the valve seat 40 is matched with the body 10 circumferentially, and the water passing channels on the valve seat 40 are always communicated with body water-passing holes in one-to-one correspondence manner; and when the valve element 20 rotates relative to the body 10 among several positions, no matter at which position the valve element 20 is, the valve element water-passing holes are communicated with the body water-passing holes in one-to-one correspondence manner via the water passing channels on the valve seat 40.

Specifically, the valve seat 40 is cooperated with the body 10 along an axial direction to form several water passing cavities, and the water passing cavities are communicated with the water passing channels in one-to-one correspondence manner; the body water-passing holes are formed along the axial direction of the body 10; the range of the water passing cavities should at least correspond to a rotating range of the valve element 20, and when the valve seat 40 rotates in the range, the body water-passing holes are communicated with the water passing cavities in one-to-one correspondence manner.

The water passing cavities are formed by hermetical cooperation between the water sealing plates on the valve seat 40 and the body 10. As shown in Fig. 1, the first water sealing plate 41 and the second water sealing plate 42 cooperate with the body 10 to form the first water passing cavity 11, the second water sealing plate 42 and the third water sealing plate 43 cooperate with the body 10 to form the second water passing cavity 12, and the third water sealing plate 43 cooperates with the body 10 to form the third water passing cavity 13.

Specifically speaking, the periphery of the first water sealing plate 41 is hermetically matched with the inner side wall of the chamber of the body 10, and meanwhile, the periphery of the second water sealing plate 42 is hermetically matched with the inner side wall of the chamber of the body 10, and a body water-passing hole between the two water sealing plates is formed in the body 10. When the first water-passing hole 451 is aligned and communicated with one of valve element water-passing holes in the valve element 20, the first water passing cavity 11 can be communicated with the valve element 20. Similarly, the peripheries of the second water sealing plate 42 and the third water sealing plate 43 are further hermetically matched with the body 10 to form the second water passing cavity 12, and when the third water-passing hole 453 is aligned and communicated with one of valve element water-passing holes in the valve element 20, the second water passing cavity 12 can be communicated with the valve element 20 via the first water passing pipe 411 and the fourth water-passing hole 461.Similarly, the third water passing cavity 13 is directly formed by the hermetical cooperation between the third water sealing plate 43 and the body 10, and after the second water-passing hole 453 is aligned and communicating with one of the valve element water-passing holes in the valve element 20, the third water passing cavity 13 can be communicated with the valve element 20 via the second water passing pipe 412, the third water passing pipe 421 and the sixth water-passing hole 471.

Further, by providing the water passing cavity, when the valve element 20 rotates and the valve seat 40 rotates accordingly, the body water-passing holes can still be communicated with the valve element water-passing holes in the valve element 20 in one-to-one correspondence manner via the water passing cavity, such that the valve element 20 can rotate in a range in which the water passing cavity and the body water-passing hole could communicate with each other. When it is needed to adjust the position of the handle 30, it just needs to rotate the valve element 20 to a proper position directly and then connect the handle 30 fixedly to the valve rod of the valve element 20 by way of insertion fit, and redesign of the structure of the body 10 is not needed.

In the embodiment, the valve element 20 is configured to switch among three positions which correspond to the three positioning slots formed in the body 10. The positioning protrusion 44 on the valve seat 40 is arranged corresponding to the positioning slots in the body 10 and is configured to be matched with the positioning slots in an inserted manner to achieve position adjustment of the valve seat 40. Specifically, the positioning protrusion 44 is matched with the positioning slots in shape, and the positioning protrusion 44can be switched among the first positioning slot 141, the second positioning slot 142 and the third positioning slot 143, and is fixed to one of the three positions by being matched with the positioning slots in shape.

During assembly, the valve seat 40 is mounted in the chamber of the body 10, then the valve element 20 is mounted and the handle 30 is fixed to the valve rod of the valve element 20.

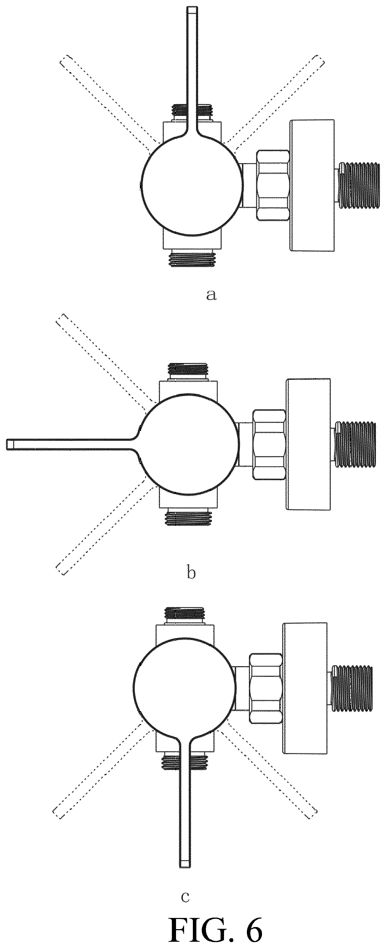

During use, as shown in Fig. 6, when it needs to change the orientation of the handle 30, the position of the valve seat 40 can be adjusted before assembly, then the position of the valve element 20 is adjusted, or the valve element 20 is connected with the valve seat 40 first, by adjusting the position of the valve element 20, the position of the valve seat 40 shall be adjusted accordingly , thereby, the rotating range of the valve rod can be changed, and the orientation of the handle 30 can be changed also.

### Embodiment 2

In addition, the disclosure further provides embodiment 2. The difference between embodiment 2 and embodiment 1 primarily lies in difference in the structure of the valve seat 40 and the body 10 .

In embodiment 2, the valve seat 40 is of a platy structure which is provided with several homocentric round or annular through grooves penetrating through two opposite wall surfaces of the valve seat 40 to form the water passing channels, and meanwhile, each of the body water-passing holes in the body 10 is further formed in one wall surface corresponding to the valve seat 40, the body water-passing holes in the wall surface are hermetically communicated with the through grooves in one-to-one correspondence manner, and when the valve element 20 rotates relative to the body to any position, the valve element water-passing holes shall always be in communication with the through grooves in one-to-one correspondence manner.

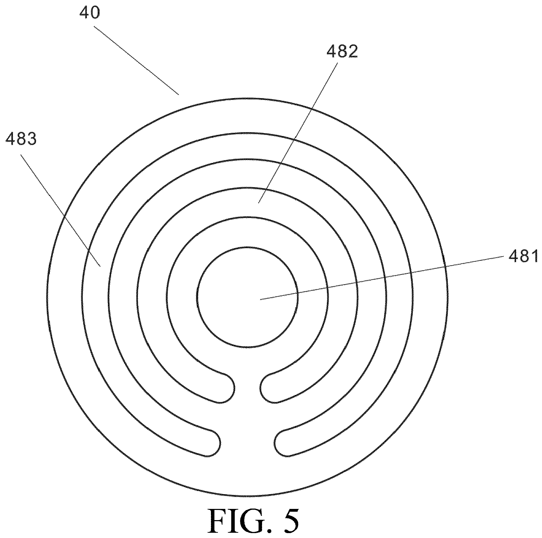

Specifically, as shown in Fig. 5, the valve seat 40 is provided with three through grooves which are the first through groove 481, the second through groove 482 and the third through groove 483respectively, the first through groove 481 is a round hole located at the center of the valve seat 40, the second through groove 482 is of an incomplete annular ring structure and is homocentric with the first through groove 481, and the third through groove 483 is of an incomplete annular ring structure, homocentric with the first through groove 481 and located outside the second through groove 482.

As the water passing channel is of a groove-like structure with a length, when the position of the valve element 20 changes, as long as the valve element water-passing holes are within the range of the through grooves, the valve element water-passing holes in the valve element 20 shall be in communication with the valve element water-passing holes in one-to-one correspondence manner. Thus, as long as the valve element 20 is within the range of the through grooves, no matter at which position the valve element 20 is, the valve element water-passing hole can always be communicated with the body water-passing holes in one-to-one correspondence manner.

By arranging sealing gaskets between the valve seat 40, the body 10 and the valve element 20, the through grooves in the valve seat 40 can be independently communicated with the body water-passing holes and the valve element water-passing holes, and due to the structure of the valve seat 40, when the valve element 20 rotates, the valve element water-passing holes can be kept communicated with the body water-passing holes in one-to-one correspondence manner as long as the valve element water-passing holes are within the range of the corresponding through groove.

The disclosure provides a shower. By providing the valve seat 40 that is separated from the body 10 and the valve element 20, when the position of the valve element 20 changes, the body water-passing holes can always be kept communicated with the valve element water-passing holes through the water passing channels on the valve seat 40, and the problem that the rotating range of the handle 30 cannot be changed is solved, such that the shower can be matched with handles of various rotating ranges, and redesigning and producing of the shower is not needed, thus reducing the manufacturing cost effectively.

The foregoing descriptions in the specification and embodiments serve to explain the protection scope of the disclosure, but do not constitute a limitation on the protection scope of the disclosure. Through inspiration provided by the disclosure or the embodiments, modifications, equivalents, or other improvements of the embodiments or part of the technical features of the disclosure obtained by a person having ordinary skill in the art by combining general knowledge and common technical knowledge in the art and/or related art through logical analyses, reasoning, or limited tests fall within the protection scope of the disclosure.

## Claims

1. A shower, comprising a body(10), a valve element(20)and a handle(30), wherein the valve element(20) is mounted on the body(10) and is provided with several valve element water-passing holes, the handle(30) is fixedly connected to a valve rod of the valve element(20), and the body(10) is provided with body water-passing holes communicated with the valve element water-passing holes in one-to-one correspondence manner;
**characterized by** further comprising:
a valve seat(40) located between the body(10) and the valve element(20) and circumferentially matched with the body(10), wherein the valve seat(40) is provided with several mutually independent water passing channels, and the water passing channels are always communicated with the body water-passing holes in one-to-one correspondence manner; and
the valve element(20) rotates relative to the body(10)among several positions, and no matter at which position the valve element(20) is, the valve element water-passing holes shall always be communicated with the body water-passing holes via the water-passing channels in one-to-one correspondence manner.

2. The shower according to claim 1, **characterized in that** the valve seat(40) is provided with several homocentric round or annular through grooves(481, 482, 483) penetrating through two opposite wall surfaces of the valve seat(40) to form the water passing channels, the body water-passing holes are hermetically communicated with the through grooves(481, 482, 483)in one-to-one correspondence manner, and when the valve element(20) rotates relative to the body(10)to any position, the valve element water-passing holes shall be in communication with the through grooves(481, 482, 483)in one-to-one correspondence manner.

3. The shower according to claim 1, **characterized in that** the valve seat(40) is matched with the body(10) along an axial direction to form several water-passing cavities(11,12,13), and the water-passing cavities(11,12,13) are communicated with the water-passing channels in one-to-one correspondence manner; the body water-passing holes are formed along the axial direction of the body(10); a range of the water-passing cavities(11,12,13) at least corresponds to a rotating range of the valve element(20),and when the valve seat(40) rotates in the range, the body water-passing holes are kept in communication with the water-passing cavities(11,12,13)in one-to-one correspondence manner.

4. The shower according to claim 3, **characterized in that** the valve seat(40) comprises several water sealing plates(41,42,43) and water passing pipes(411,412,421), the water sealing plates(41,42,43) are arranged in sequence along the axial direction of the valve seat(40) and are provided with water-passing holes(451,452,453,471461) penetrating through the water sealing plates(41,42,43)along the axial direction of the valve seat(40), and peripheries of the water sealing plates(41,42,43) are hermetically matched with the body(10) to form the water passing cavities(11,12,13), and the water passing pipes(411,412,421) are communicated with the water-passing holes(451,452,453,471461) of the two adjacent water sealing plates(41,42,43) to form the water passing channels.

5. The shower according to claim 4, **characterized in that** diameters of the plurality of water sealing plates(41,42,43) are decreased in sequence along the axial direction of the valve seat(40) from outside to inside.

6. The shower according to any one of claim 4 or 5, **characterized in that** the valve seat(40) comprises a first water sealing plate(41), a second water sealing plate(42) and a third water sealing plate(43), the first water sealing plate(41) and the second water sealing plate(42) are matched with the body(10) to form a first water passing cavity(11), the second water sealing plate(42) and the third water sealing plate(43) are matched with the body(10) to form a second water passing cavity(12), and the third water sealing plate(43) is matched with the body(10) to form a third water passing cavity(13);
the first water sealing plate(41) is provided with three water-passing holes(451,452,453), one end of one of the three water-passing holes(451,452,453) is communicated with the first water-passing cavity(11), while the other end of the one of the three water-passing holes(451,452,453) is communicated with one of the valve element water-passing holes, and the other two water-passing holes(451,452,453) are communicated with a first water-passing pipe(411) and a second water-passing pipe(412) respectively;
the second water sealing plate(42) is provided with two water-passing holes, one end of one(461) of the two water-passing holes is communicated with the second water passing cavity(12) while the other end of the one(461) of the two water-passing holes is communicated with the first water passing pipe(411), and one end of the other water-passing hole is communicated with the second water passing pipe(412) and the other end of the other water-passing hole is communicated with a third water passing pipe(421); and
the third water sealing plate(43) is provided with a sixth water-passing hole(471), one end of the water-passing hole(471) is communicated with the third water passing cavity(13) while the other end of the water-passing hole(471) is communicated with the third water passing pipe(421).

7. The shower according to claim 6, **characterized in that** the body(10) is provided with several positioning slots(141,142,143) along a circumferential direction, the valve seat(40) is provided with positioning protrusion(44), and the positioning protrusion(44)is configured to match with the positioning slots(141,142,143) in an inserted manner, so as to realize position adjustment of the valve seat(40).

8. The shower according to claim 7, **characterized in that** there are three positioning slots(141,142,143), and a phase angle difference between at least one positioning slot(141,142,143) and the other two positioning slots(141,142,143) is 90 degrees.
